# FASCICULE DE BREVET EUROPEEN

(11) **EP 3 339 170 B1**
(45) Date de publication et mention de la délivrance du brevet: **27.07.2022**
(21) Numéro de dépôt: 17210111.5
(22) Date de dépôt: 22.12.2017
(51) Int. Cl.: B64C 25/44, B60T 13/74, B60T 8/17

(54) **ARCHITECTURE DE SYSTEME DE FREINAGE POUR AERONEF**
AUFBAU EINES BREMSSYSTEMS FÜR EIN LUFTFAHRZEUG
ARCHITECTURE OF AN AIRCRAFT BRAKING SYSTEM

(30) Priorité: 23.12.2016 FR 1663331
(43) Date de publication de la demande: 27.06.2018
(73) Titulaire: Safran Landing Systems, 78140 Vélizy-Villacoublay (FR)
(72) Inventeur: GOYEZ, Brian, 78140 Velizy-Villacoublay (FR); ONFROY, Dominique, 78140 Velizy-Villacoublay (FR); FREY, Olivier, 78140 Velizy-Villacoublay (FR)
(74) Mandataire: Lavaud, Thomas

(56) Documents cités:
- EP-A1- 2 878 501
- EP-A2- 2 824 809
- US-A1- 2005 110 339
- US-A1- 2011 226 569

## Description

L'invention concerne le domaine des architectures de système de freinage pour aéronef.

### ARRIERE PLAN DE L'INVENTION

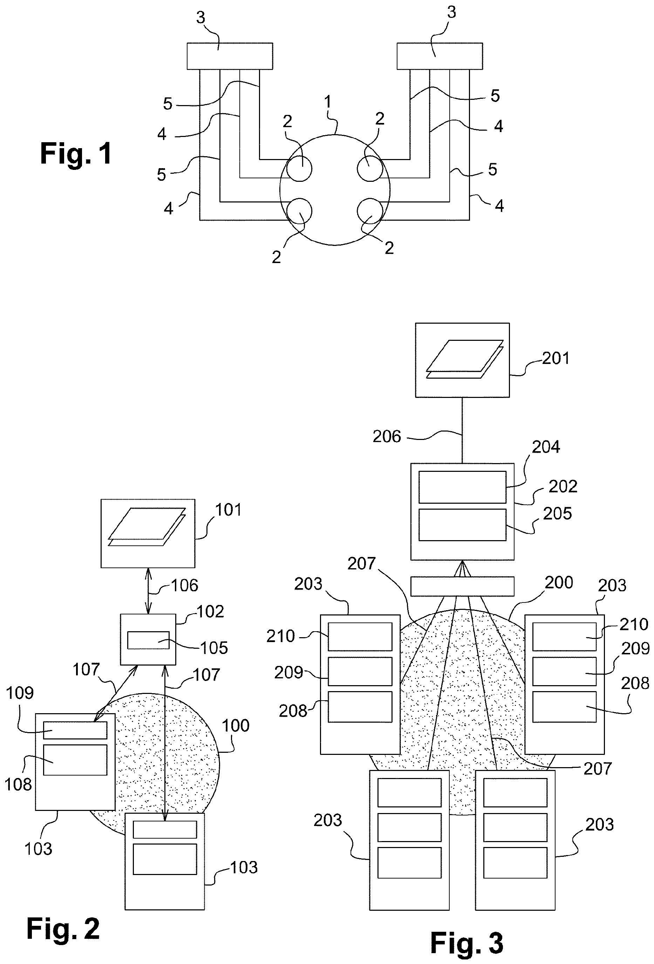

En référence à la figure 1, une architecture centralisée connue de système de freinage électrique d'aéronef comprend une pluralité de freins 1 destinés chacun à freiner une roue d'un atterrisseur de l'aéronef.

Chaque frein 1 comporte quatre actionneurs électromécaniques de freinage 2 qui sont regroupés en deux groupes distincts de deux actionneurs électromécaniques 2.

Les deux actionneurs électromécaniques 2 de chaque groupe distinct sont connectés à un même calculateur 3 situé dans le fuselage de l'aéronef, en haut de l'atterrisseur.

Le moteur électrique de chaque actionneur électromécanique 2 reçoit un courant électrique triphasé d'alimentation du calculateur 3 auquel l'actionneur électromécanique 2 est connecté, et chaque actionneur électromécanique 2 transmet des mesures d'un paramètre d'asservissement au calculateur 3, par exemple des mesures de position angulaire du rotor du moteur électrique. Les calculateurs 3 mettent en œuvre des fonctions de contrôle et de commande des actionneurs électromécaniques 2, ainsi que des fonctions de génération de puissance qui utilisent des onduleurs.

On constate que cette architecture centralisée nécessite l'utilisation de dix fils électriques au moins par actionneur électromécanique 2 : trois fils d'alimentation 4 pour les trois phases du moteur électrique, quatre fils de communication 5 pour remonter à un calculateur centralisé 3 les mesures de position angulaire du rotor du moteur électrique, ainsi que deux fils d'alimentation et un fil de mise à la masse (non représentés sur la figure 1) pour piloter un organe de blocage de l'actionneur électromécanique 2 permettant de mettre en œuvre un freinage de parc.

Ces fils électriques sont intégrés dans des harnais qui cheminent depuis le fuselage de l'aéronef vers le frein 1 et qui sont donc encombrants et pesants. La longueur importante des harnais dans lesquels cheminent les fils d'alimentation 4 (et donc les courants d'alimentation des moteurs électriques) impose d'intégrer dans les calculateurs 3 des circuits de filtrage des courants de mode commun. Les circuits de filtrage augmentent la masse, la complexité et le coût des calculateurs 3 et donc du système de freinage.

Le document US 2011/226569 A1 dévoile une architecture de système de freinage pour aéronef de l'art antérieur.

Elle comporte un frein pour une roue, un calculateur, ainsi qu'un EBAC connecté au calculateur et aux actionneurs électromécaniques du frein.

### OBJET DE L'INVENTION

L'invention a pour objet de réduire l'encombrement, la masse, la complexité et le coût d'un système de freinage.

### RESUME DE L'INVENTION

En vue de la réalisation de ce but, on propose une architecture de système de freinage pour aéronef selon la revendication 1.

L'utilisation du boîtier de jonction permet de mutualiser la génération des deuxièmes signaux de pilotage à partir des premiers signaux de pilotage, et donc de réduire le nombre de câbles circulant depuis le fuselage de l'aéronef vers le frein. On réduit par ailleurs le nombre de composants pour mettre en œuvre des fonctions qui peuvent être mutualisées dans le boîtier de jonction, et donc on réduit la masse et la complexité du système de freinage, et on améliore sa fiabilité.

D'autres caractéristiques et avantages de l'invention ressortiront à la lecture de la description qui suit de modes de réalisation particuliers, non limitatifs de l'invention.

### BREVE DESCRIPTION DES DESSINS

Il sera fait référence aux dessins annexés parmi lesquels :
- la figure 1 représente une architecture de système de freinage de l'art antérieur ;
- la figure 2 représente une architecture de système de freinage selon un premier mode de réalisation de l'invention ;
- la figure 3 représente une architecture de système de freinage selon un deuxième mode de réalisation de l'invention ;
- la figure 4 représente une architecture de système de freinage selon un troisième mode de réalisation qui n'est pas couvert par les revendications
- la figure 5 représente une architecture de système de freinage selon un quatrième mode de réalisation de l'invention ;
- la figure 6 représente une architecture de système de freinage selon un cinquième mode de réalisation qui n'est pas couvert par les revendications;
- la figure 7 représente une architecture de système de freinage selon un sixième mode de réalisation de l'invention.

### DESCRIPTION DETAILLEE DE L'INVENTION

L'invention est ici mise en œuvre sur un aéronef qui comporte une pluralité d'atterrisseurs principaux portant chacun une pluralité de roues dites « freinées », c'est à dire une pluralité de roues équipées chacune d'un frein pour freiner l'aéronef. La présente description porte sur une unique roue freinée, mais l'invention s'applique bien sûr de la même manière à tout ou partie des roues freinées de l'aéronef.

En référence à la figure 2, une architecture de système de freinage pour aéronef selon un premier mode de réalisation de l'invention comporte un frein 100 destiné à freiner une roue de l'aéronef, un calculateur 101 et un boîtier de jonction 102.

Le frein 100 comporte quatre actionneurs électromécaniques de freinage 103 (seuls deux actionneurs électromécaniques 103 sont représentés sur la figure 2).

Le calculateur 101, intégré dans un réseau avionique, est positionné dans une baie située dans le fuselage de l'aéronef.

Le boîtier de jonction 102 est situé sur l'atterrisseur, à proximité du frein. Le boîtier de jonction 102 comporte des moyens de traitement électriques 105 comprenant ici un commutateur numérique. Le calculateur 101 et le boîtier de jonction 102 sont connectés par un premier bus numérique 106 comportant un premier nombre de fils. Le boîtier de jonction 102 est connecté à chaque actionneur électromécanique 103 par un deuxième bus numérique 107 comportant un deuxième nombre de fils.

Outre les quatre actionneurs électromécaniques 103, le frein 100 comporte un porte-actionneurs sur lequel sont montés les quatre actionneurs électromécaniques 103 et des organes de friction, en l'occurrence une pile de disques de carbone.

Les quatre actionneurs électromécaniques 103 sont utilisés pour appliquer un effort de freinage sur la pile de disques de carbone et exercer ainsi un couple de freinage sur la roue qui ralentit la rotation de la roue et donc freine l'aéronef lorsque celui-ci est au sol.

Chaque actionneur électromécanique 103 comporte un corps fixé au porte-actionneurs, un poussoir et un organe de blocage adapté à bloquer en position le poussoir. Un moteur électrique, un module de puissance 108 et un module de communication numérique 109 sont intégrés à l'intérieur du corps de chaque actionneur électromécanique 103.

Le poussoir est actionné par le moteur électrique pour coulisser et appliquer l'effort de freinage sur la pile de disques de carbone.

Le module de puissance 108 permet de générer un courant d'alimentation alternatif qui circule dans trois phases du moteur électrique lorsqu'il convient d'actionner le poussoir et donc de freiner la roue, et lorsqu'il convient de retirer le poussoir pour arrêter de freiner la roue. Le module de puissance 108 comporte à cet effet un onduleur comprenant une pluralité d'interrupteurs qui sont commandés de manière à transformer une tension d'alimentation continue en une tension alternative triphasé sous laquelle est généré le courant d'alimentation du moteur électrique.

Les tensions d'alimentation continues reçues par les modules de puissance 108 des quatre actionneurs électromécaniques 103 du frein 100 proviennent d'une ou de plusieurs unités d'alimentation situées dans le fuselage de l'aéronef et non représentées sur la figure 2.

Le calculateur 100 produit des premiers signaux de pilotage. Le boîtier de jonction 102 est agencé pour recevoir les premiers signaux de pilotage. Les moyens de traitement électriques 105 du boîtier de jonction sont agencés pour produire, à partir des premiers signaux de pilotage, des deuxièmes signaux de pilotage à destination des actionneurs électromécaniques 103 pour piloter les actionneurs électromécaniques 103.

Les premiers signaux de pilotage et les deuxièmes signaux de pilotage comprennent ici des signaux numériques de commande des moteurs électriques des actionneurs électromécaniques 103.

Les signaux numériques de commande, produits par le calculateur 100, sont distribués aux modules de communication numériques 109 des actionneurs électromécaniques 103 via le commutateur numérique des moyens de traitement électriques 105 du boîtier de jonction 102.

Le module de communication numérique 109 de chaque actionneur électromécanique 103 transforme les signaux numériques de commande qui lui sont destinés en signaux de commande d'onduleur et transmet au module de puissance 108 et donc à l'onduleur du module de puissance 108 les signaux de commande d'onduleur. Les signaux de commande d'onduleur pilotent les interrupteurs dudit onduleur.

Les modules de communication numérique 109 des quatre actionneurs électromécaniques 103, ainsi que le commutateur numérique des moyens de traitement électriques 105 du boîtier de jonction 102 sont ainsi interconnectés pour former un réseau numérique.

On note que des signaux numériques peuvent aussi être remontés depuis la roue vers le calculateur 101 et donc vers le réseau avionique, via les deuxièmes bus numériques 107 et le premier bus numérique 106. Les deuxièmes bus numériques 107 et le premier bus numérique 106 sont ainsi des bus bidirectionnels.

Les signaux numériques comprennent par exemple des signaux numériques de mesure produits par un concentrateur de données situé sur la roue. Le concentrateur de données reçoit lui-même des signaux analogiques de mesure produits par des capteurs situés sur la roue et génère les signaux numérique de mesure à partir des signaux analogiques de mesure. Les capteurs mesurent des paramètres représentatifs d'un état de la roue, par exemple une température du frein ou une pression du pneumatique de la roue.

Les signaux numériques peuvent aussi comprendre des signaux numériques de mesure produits par des capteurs associés aux moteurs électriques des actionneurs électromécaniques 103. Ces signaux numériques de mesure permettent de contrôler les moteurs électriques des actionneurs électromécaniques.

Les capteurs associés aux moteurs électriques des actionneurs électromécaniques 103 mesurent par exemple une position angulaire ou une vitesse des rotors des moteurs électriques, ou bien ces courants de phase consommés par les moteurs électriques.

On note ici qu'un boîtier de jonction situé sur l'atterrisseur est classiquement présent dans les architectures de système de freinage traditionnelles. Le rôle habituel du boîtier de jonction est de distribuer vers chaque actionneur électromécanique le câblage qui provient d'un harnais longeant la jambe de l'atterrisseur, pour fournir aux actionneurs électromécaniques leur tension d'alimentation.

Dans l'invention, on munit donc le boîtier de jonction existant de fonctions nouvelles et innovantes, pour obtenir le boîtier de jonction 102, sans modifier de manière importante les interfaces mécaniques d'un boîtier de jonction existant. Ces fonctions ne nécessitent pas un équipement additionnel, puisque le boîtier de jonction est présent dans les architectures traditionnelles.

En référence à la figure 3, une architecture de système de freinage pour aéronef selon un deuxième mode de réalisation de l'invention comporte un frein 200 destiné à freiner une roue de l'aéronef, un calculateur 201 et un boîtier de jonction 202.

Le frein 200 comporte quatre actionneurs électromécaniques de freinage 203.

Le calculateur 201, intégré dans un réseau avionique, est positionné dans une baie située dans le fuselage de l'aéronef.

Le boîtier de jonction 202 est situé sur l'atterrisseur, à proximité du frein 200. Le boîtier de jonction 202 comporte des premiers moyens de traitement électriques 204 et des deuxièmes moyens de traitement électriques 205. Les premiers moyens de traitement électriques 204 sont agencés pour réaliser une fonction de contrôle et de commande des moteurs électriques des quatre actionneurs électromécaniques 203. Les deuxièmes moyens de traitement électriques 205 sont eux aussi agencés pour réaliser une fonction de contrôle et de commande des moteurs électriques des quatre actionneurs électromécaniques 203.

Le calculateur 201 et le boîtier de jonction 202 sont connectés par un premier harnais 206 comportant un premier nombre de fils. Le premier harnais 206 comporte un premier bus numérique. Le boîtier de jonction 202 est connecté à chaque actionneur électromécanique 203 par un deuxième harnais 207 comportant un deuxième nombre de fils. Chaque deuxième harnais 207 comporte un deuxième bus numérique.

Chaque actionneur électromécanique 203 comporte un corps fixé au porte-actionneurs, un poussoir et un organe de blocage adapté à bloquer en position le poussoir.

Un moteur électrique, un module de puissance 208, un premier module de communication numérique 209 et un deuxième module de communication numérique 210 sont intégrés à l'intérieur du corps de chaque actionneur électromécanique 203.

Le module de puissance 208 permet de générer un courant d'alimentation alternatif qui circule dans trois phases du moteur électrique lorsqu'il convient d'actionner le poussoir et donc de freiner la roue, et lorsqu'il convient de retirer le poussoir pour arrêter de freiner la roue. Le module de puissance 203 comporte à cet effet un onduleur comprenant une pluralité d'interrupteurs qui sont commandés de manière à transformer une tension d'alimentation continue en une tension alternative triphasé sous laquelle est généré le courant d'alimentation du moteur électrique.

Les tensions d'alimentation reçues par les modules de puissance 208 des quatre actionneurs électromécaniques 203 du frein proviennent d'une ou de plusieurs unités d'alimentation situées dans le fuselage de l'aéronef et non représentées sur la figure 3.

Le calculateur 201 produit des premiers signaux de pilotage. Le boîtier de jonction 202 est agencé pour recevoir les premiers signaux de pilotage. Les premiers moyens de traitement électriques 204 et les deuxièmes moyens de traitement électriques 205 du boîtier de jonction 202 sont agencés pour produire, à partir des premiers signaux de pilotage, des deuxièmes signaux de pilotage à destination des actionneurs électromécaniques 203 pour piloter les actionneurs électromécaniques 203.

Les premiers signaux de pilotage comprennent ici des signaux numériques de commande de freinage.

Les deuxièmes signaux de pilotage comprennent ici des signaux numériques de commande des moteurs électriques des actionneurs électromécaniques.

Les premiers moyens de traitement électriques 204 du boîtier de jonction 202 génèrent ainsi, à partir des signaux numériques de commande de freinage, des signaux numériques de commande des moteurs électriques des actionneurs électromécaniques 203 à destination du premier module de communication numérique 209 de chaque actionneur électromécanique 203.

Les deuxièmes moyens de traitement électriques 205 du boîtier de jonction 202 génèrent ainsi, à partir des signaux numériques de commande de freinage, des signaux numériques de commande des moteurs électriques des actionneurs électromécaniques 203 à destination du deuxième module de communication numérique 210 de chaque actionneur électromécanique 203.

Le premier module de communication numérique 209 et le deuxième module de communication numérique 210 d'un actionneur électromécanique 203 transmettent au module de puissance 208 et donc à l'onduleur du module de puissance 208 dudit actionneur électromécanique 203 des signaux de commande d'onduleur qui lui sont destinés, générés à partir des signaux numériques de commande des moteurs électriques. Les signaux de commande d'onduleur pilotent les interrupteurs dudit onduleur.

On note que l'utilisation des premiers moyens de traitement électriques 204 et des deuxièmes moyens de traitement électriques 205 dans le boîtier de jonction 202, et du premier module de communication numérique 209 et du deuxième module de communication numérique 210 dans chaque actionneur électromécanique 203, permettent d'obtenir simplement deux voies de commande dissimilaires, sans multiplier les composants et sans que la conception des composants ne soit trop complexe. L'architecture de système de freinage selon le deuxième mode de réalisation de l'invention présente ainsi des niveaux de sécurité et de fiabilité importants.

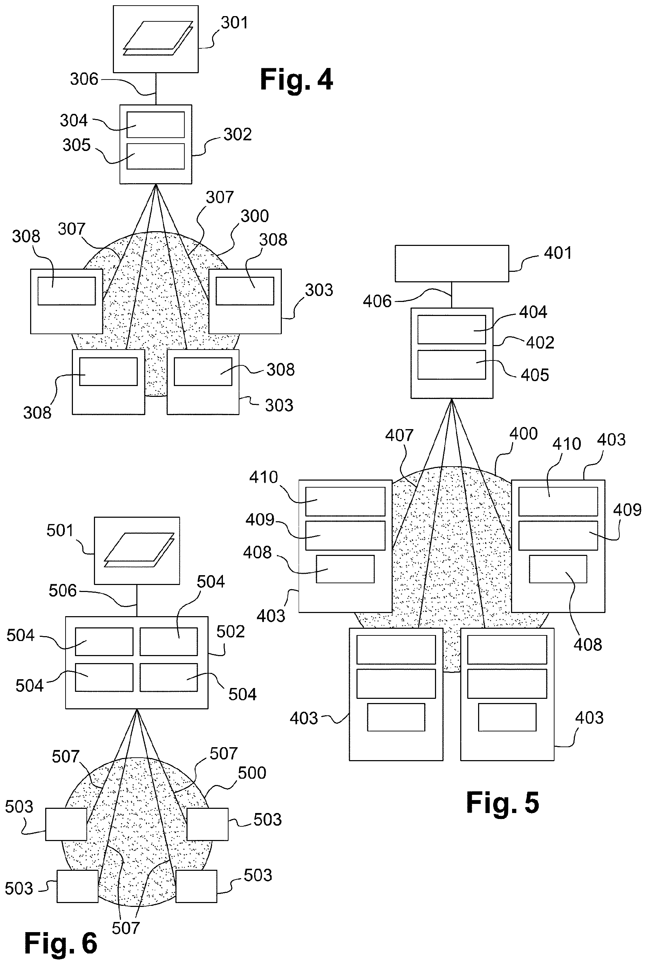

En référence à la figure 4, une architecture de système de freinage pour aéronef selon un troisième mode de réalisation comporte un frein 300 destiné à freiner une roue de l'aéronef, un calculateur 301 et un boîtier de jonction 302.

Le frein 300 comporte quatre actionneurs électromécaniques de freinage 303.

Le calculateur 300, intégré dans un réseau avionique, est positionné dans une baie située dans le fuselage de l'aéronef.

Le boîtier de jonction 302 est situé sur l'atterrisseur, à proximité du frein. Le boîtier de jonction 302 comporte des premiers moyens de traitement électriques 304 et des deuxièmes moyens de traitement électriques 305. Les premiers moyens de traitement électriques 304 comprennent un premier convertisseur numérique-analogique. Les deuxièmes moyens de traitement électriques 305 comprennent un deuxième convertisseur numérique-analogique.

Le calculateur 300 et le boîtier de jonction 302 sont connectés par un premier harnais 306 comportant un bus numérique. Le boîtier de jonction 302 est connecté à chaque actionneur électromécanique 303 par un deuxième harnais 307.

Chaque actionneur électromécanique 303 comporte un corps fixé au porte-actionneurs, un poussoir et un organe de blocage adapté à bloquer en position le poussoir. Un moteur électrique et un module de puissance 308 sont intégrés à l'intérieur du corps de chaque actionneur électromécanique 303.

Le module de puissance 308 permet de générer un courant d'alimentation alternatif qui circule dans trois phases du moteur électrique lorsqu'il convient d'actionner le poussoir et donc de freiner la roue, et lorsqu'il convient de retirer le poussoir pour arrêter de freiner la roue. Le module de puissance 308 comporte à cet effet un onduleur comprenant une pluralité d'interrupteurs qui sont commandés de manière à transformer une tension d'alimentation continue en une tension alternative triphasé sous laquelle est généré le courant d'alimentation du moteur électrique.

Les tensions d'alimentation reçues par les modules de puissance 308 des quatre actionneurs électromécaniques 303 du frein proviennent d'une ou de plusieurs unités d'alimentation situées dans le fuselage de l'aéronef et non représentées sur la figure 4.

Le calculateur 301 produit des premiers signaux de pilotage. Le boîtier de jonction 302 est agencé pour recevoir les premiers signaux de pilotage. Les premiers moyens de traitement électriques 304 et les deuxièmes moyens de traitement électriques 305 du boîtier de jonction 302 sont agencés pour produire, à partir des premiers signaux de pilotage, des deuxièmes signaux de pilotage à destination des actionneurs électromécaniques 303 pour piloter les actionneurs électromécaniques 303.

Les premiers signaux de pilotage comprennent ici des signaux numériques de commande des moteurs électriques des actionneurs électromécaniques 303. Les signaux numériques de commande mettent ici en œuvre une fonction de commande à modulation de largeur d'impulsions.

Les signaux numériques de commande, produits par le calculateur 301, sont transmis aux premiers moyens de traitement électriques 304 et aux deuxièmes moyens de traitement électriques 305.

Le premier convertisseur numérique-analogiques des premiers moyens de traitement électriques 304 convertit les signaux numériques de commande en signaux analogiques de commande d'onduleur. Le deuxième convertisseur numérique-analogiques des deuxièmes moyens de traitement électriques 305 convertit aussi les signaux numériques de commande en signaux analogiques de commande d'onduleur.

Les deuxièmes signaux de pilotage comprennent donc ici les signaux analogiques de commande d'onduleur.

Le module de puissance 308 de chaque actionneur électromécanique 303 reçoit donc des signaux analogiques de commande d'onduleur, et pilote l'onduleur dudit module de puissance 308 grâce à ces signaux analogiques de commande d'onduleur.

Avantageusement, les premiers moyens de traitement électriques 304 comportent un premier convertisseur analogique-numérique, et les deuxièmes moyens de traitement électriques 305 comportent un deuxième convertisseur analogique-numérique. Les signaux analogiques de mesure peuvent être des signaux analogiques de mesure produits par des capteurs situés sur la roue, ou bien des signaux analogiques de mesure produits par des capteurs associés aux moteurs électriques des actionneurs électromécaniques 303. Les capteurs associés aux moteurs électriques des actionneurs électromécaniques 303 mesurent par exemple une position angulaire ou une vitesse des rotors des moteurs électriques, ou bien ces courants de phase consommés par les moteurs électriques.

En référence à la figure 5, une architecture de système de freinage pour aéronef selon un quatrième mode de réalisation de l'invention comporte un frein 400 destiné à freiner une roue de l'aéronef, un calculateur 401 et un boîtier de jonction 402.

Le frein comporte quatre actionneurs électromécaniques de freinage 403.

Le calculateur 401, intégré dans un réseau avionique, est positionné dans une baie située dans le fuselage de l'aéronef.

Le boîtier de jonction 402 est situé sur l'atterrisseur, à proximité du frein 400. Le boîtier de jonction 402 comporte des premiers moyens de traitement électriques 404 et des deuxièmes moyens de traitement électriques 405. Les premiers moyens de traitement électriques 404 sont agencés pour réaliser une fonction de commande de freinage. Les deuxièmes moyens de traitement électriques 405 sont eux aussi agencés pour réaliser une fonction de commande de freinage.

Le calculateur 401 et le boîtier de jonction 402 sont connectés par un premier harnais 406 comportant un premier bus numérique. Le boîtier de jonction 402 est connecté à chaque actionneur électromécanique 403 par un deuxième harnais 407 comportant un deuxième bus numérique.

Chaque actionneur électromécanique 403 comporte un corps fixé au porte-actionneurs, un poussoir et un organe de blocage adapté à bloquer en position le poussoir.

Un moteur électrique, un module de puissance 408, un premier module de communication numérique 409 et un deuxième module de communication numérique 410 sont intégrés à l'intérieur du corps de chaque actionneur électromécanique 403.

Le module de puissance 408 permet de générer un courant d'alimentation alternatif qui circule dans trois phases du moteur électrique lorsqu'il convient d'actionner le poussoir et donc de freiner la roue, et lorsqu'il convient de retirer le poussoir pour arrêter de freiner la roue. Le module de puissance 408 comporte à cet effet un onduleur comprenant une pluralité d'interrupteurs qui sont commandés de manière à transformer une tension d'alimentation continue en une tension alternative triphasé sous laquelle est généré le courant d'alimentation du moteur électrique.

Les tensions d'alimentation reçues par les modules de puissance 408 des quatre actionneurs électromécaniques 403 du frein 400 proviennent d'une ou de plusieurs unités d'alimentation situées dans le fuselage de l'aéronef et non représentées sur la figure 5.

Le calculateur 401 produit des premiers signaux de pilotage. Le boîtier de jonction 402 est agencé pour recevoir les premiers signaux de pilotage. Les premiers moyens de traitement électriques 404 et les deuxièmes moyens de traitement électriques 405 du boîtier de jonction 402 sont agencés pour produire, à partir des premiers signaux de pilotage, des deuxièmes signaux de pilotage à destination des actionneurs électromécaniques 403 pour piloter les actionneurs électromécaniques 403.

Les premiers signaux de pilotage comprennent ici une consigne de freinage.

Les premiers moyens de traitement électriques 404 du boîtier de jonction 402 transforment la consigne de freinage en signaux numériques de commande de freinage. Les deuxièmes moyens de traitement électriques 405 du boîtier de jonction 402 transforment la consigne de freinage en signaux numériques de commande de freinage.

Les deuxièmes signaux de pilotage comprennent donc ici des signaux numériques de commande de freinage.

Le premier module de communication numérique 409 et le deuxième module de communication numérique 410 acquièrent les signaux numériques de commande de freinage et mettent chacun en œuvre une fonction de contrôle et de commande du moteur électrique. La fonction de contrôle et de commande produit des signaux de commande d'onduleur à partir des signaux numériques de commande de freinage.

Les signaux de commande d'onduleur pilotent les interrupteurs de l'onduleur.

On note que l'utilisation des premiers moyens de traitement électriques 404 et des deuxièmes moyens de traitement électriques 405 dans le boîtier de jonction 402, et l'utilisation du premier module de communication numérique 409 et du deuxième module de communication numérique 410 dans chaque actionneur électromécanique 403, permettent d'obtenir simplement deux voies de commande dissimilaires, sans multiplier les composants et sans que le conception des composants ne soit trop complexe. L'architecture de système de freinage selon le quatrième mode de réalisation de l'invention présente ainsi des niveaux de sécurité et de fiabilité importants.

En référence à la figure 6, une architecture de système de freinage pour aéronef selon un cinquième mode de réalisation (qui ne fait pas partie de l'invention) comporte un frein 500 destiné à freiner une roue de l'aéronef, un calculateur 501 et un boîtier de jonction 502.

Le frein comporte quatre actionneurs électromécaniques de freinage 503.

Le calculateur 501, intégré dans un réseau avionique, est positionné dans une baie située dans le fuselage de l'aéronef.

Le boîtier de jonction 502 est situé sur l'atterrisseur, à proximité du frein 500. Le boîtier de jonction 502 comporte des moyens de traitement électriques comprenant quatre convertisseurs de puissance 504. Chaque convertisseur de puissance 504 comprend un onduleur.

Le calculateur 501 et le boîtier de jonction 502 sont connectés par un premier harnais 506. Le boîtier de jonction 502 est connecté à chaque actionneur électromécanique 503 par un deuxième harnais 507.

Chaque actionneur électromécanique 503 comporte un corps fixé au porte-actionneurs, un poussoir et un organe de blocage adapté à bloquer en position le poussoir.

Un moteur électrique est intégré à l'intérieur du corps de chaque actionneur électromécanique 503.

Le calculateur 501 produit des premiers signaux de pilotage. Le boîtier de jonction 502 est agencé pour recevoir les premiers signaux de pilotage. Les moyens de traitement électriques du boîtier de jonction 502 sont agencés pour produire à partir des premiers signaux de pilotage des deuxièmes signaux de pilotage à destination des actionneurs électromécaniques 503 pour piloter les actionneurs électromécaniques.

Les premiers signaux de pilotage comprennent une tension d'alimentation continue générée par le calculateur 503 et transmise au boîtier de jonction 502 via le premier harnais 506, et des signaux de commande d'onduleur. La tension d'alimentation continue est générée par le calculateur 503 à partir d'une source d'alimentation embarquée.

Chaque convertisseur de puissance 504 des moyens de traitement électriques du boîtier de jonction 502 génère, à partir de la tension d'alimentation continue et des signaux de commande d'onduleur, des courants de phase à destination du moteur électrique de l'un des actionneurs électromécaniques 503.

Les deuxièmes signaux de pilotage comprennent donc des courants de phase des moteurs électriques des actionneurs électromécaniques 503.

On note que l'architecture de système de freinage selon le cinquième mode de réalisation permet de simplifier le câblage, en acheminant vers le boîtier de jonction une tension d'alimentation continue et non une tension d'alimentation triphasée.

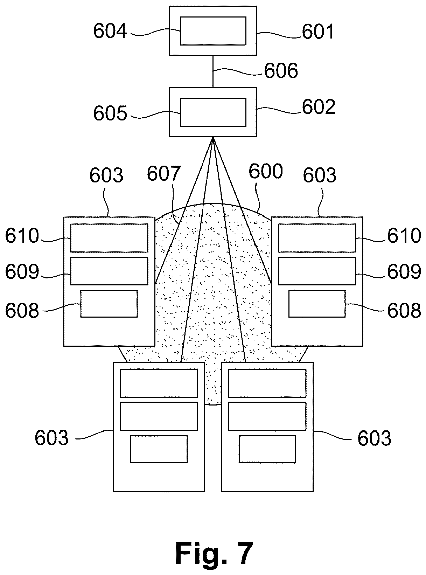

En référence à la figure 7, une architecture de système de freinage pour aéronef selon un sixième mode de réalisation de l'invention comporte un frein 600 destiné à freiner une roue de l'aéronef, un calculateur 601 et un boîtier de jonction 602.

Le frein comporte quatre actionneurs électromécaniques de freinage 603.

Le calculateur 601, intégré dans un réseau avionique, est positionné dans une baie située dans le fuselage de l'aéronef.

Le calculateur 601 comporte des premiers moyens de traitement électriques 604. Les premiers moyens de traitement électriques 604 sont agencés pour réaliser une fonction de commande de freinage.

Le boîtier de jonction 602 est situé sur l'atterrisseur, à proximité du frein 600. Le boîtier de jonction 602 comporte des deuxièmes moyens de traitement électriques 605 comprenant ici un commutateur numérique.

Le calculateur 601 et le boîtier de jonction 602 sont connectés par un premier harnais 606 comportant un premier bus numérique. Le boîtier de jonction 602 est connecté aux actionneurs électromécaniques 603 par des deuxièmes harnais 607 comportant chacun un deuxième bus numérique.

Chaque actionneur électromécanique 603 comporte un corps fixé au porte-actionneurs, un poussoir et un organe de blocage adapté à bloquer en position le poussoir.

Un moteur électrique, un module de puissance 608, un premier module de communication numérique 609 et un deuxième module de communication numérique 610 sont intégrés à l'intérieur du corps de chaque actionneur électromécanique 603.

Le module de puissance 608 permet de générer un courant d'alimentation alternatif qui circule dans trois phases du moteur électrique lorsqu'il convient d'actionner le poussoir et donc de freiner la roue, et lorsqu'il convient de retirer le poussoir pour arrêter de freiner la roue. Le module de puissance 608 comporte à cet effet un onduleur comprenant une pluralité d'interrupteurs qui sont commandés de manière à transformer une tension d'alimentation continue en une tension alternative triphasé sous laquelle est généré le courant d'alimentation du moteur électrique.

Les tensions d'alimentation reçues par les modules de puissance 608 des quatre actionneurs électromécaniques 603 du frein 600 proviennent d'une ou de plusieurs unités d'alimentation situées dans le fuselage de l'aéronef et non représentées sur la figure 7.

Le calculateur 601 reçoit une consigne de freinage. Les premiers moyens de traitement électriques 604 du calculateur 601 transforment la consigne de freinage en signaux numériques de commande de freinage. Les premiers moyens de traitement électriques 604 produisent des premiers signaux de pilotage. Les premiers signaux de pilotage comprennent ici les signaux numériques de commande de freinage.

Le boîtier de jonction 602 est agencé pour recevoir les premiers signaux de pilotage. Les deuxièmes moyens de traitement électriques 605 du boîtier de jonction 602 sont agencés pour produire, à partir des premiers signaux de pilotage, des deuxièmes signaux de pilotage à destination des actionneurs électromécaniques 603 pour piloter les actionneurs électromécaniques 603.

Les signaux numériques de commande de freinage, produits par le calculateur 601, sont distribués au premier module de communication numérique 609 et au deuxième module de communication numérique 610 de chaque actionneur électromécanique 603 via le commutateur numérique des deuxièmes moyens de traitement électriques 605 du boîtier de jonction 602.

Les deuxièmes signaux de pilotage comprennent donc ici les signaux numériques de commande de freinage.

Le premier module de communication numérique 609 et le deuxième module de communication numérique 610 acquièrent les signaux numériques de commande de freinage et mettent chacun en œuvre une fonction de contrôle et de commande du moteur électrique. La fonction de contrôle et de commande produit des signaux de commande d'onduleur à partir des signaux numériques de commande de freinage.

Les signaux de commande d'onduleur pilotent les interrupteurs de l'onduleur.

L'invention n'est pas limitée aux modes de réalisation particuliers qui viennent d'être décrits, mais, bien au contraire, couvre toute variante entrant dans le cadre de l'invention tel que défini par les revendications.

Il est en particulier parfaitement possible de mixer certaines architectures entre elles. On peut par exemple mettre en œuvre une architecture dans laquelle le boîtier de jonction comprend des moyens de traitement qui génèrent à la fois des signaux de commande et des courants de phase des moteurs électriques.

Il est aussi parfaitement possible d'utiliser non pas un boîtier de jonction, mais une pluralité de boîtiers de jonction. Par exemple, on peut mettre en œuvre une architecture dans laquelle un premier boîtier de jonction est connecté à un premier calculateur et à deux premiers actionneurs électromécaniques du frein, et un deuxième boîtier de jonction est connecté à un deuxième calculateur et à deux deuxièmes actionneurs électromécaniques du frein.

Dans chaque architecture, il est possible de prévoir un nombre de composants différent de ceux qui sont ici présentés. Par exemple, on peut prévoir que, dans le premier mode de réalisation, chaque actionneur électromécanique comporte deux modules de communication numérique, ou bien que dans le deuxième mode de réalisation, chaque actionneur électromécanique ne comporte qu'un seul module de communication numérique, ou bien que, dans le cinquième mode de réalisation, les moyens de traitement du boîtier de jonction comportent deux convertisseurs de puissance, etc.

On a décrit ici un certain nombre de fonctions mises en œuvre dans le boîtier de jonction, et un certain nombre de composants intégrés dans le boîtier de jonction. Cette description n'est aucunement limitative. Le boîtier de jonction pourrait mettre en œuvre d'autres fonctions (par exemple, des fonctions de filtrage, de mesure, de surveillance, etc.), et comprendre d'autres composants (par exemple, des composants de filtrage, des capteurs, etc.).

On note que le calculateur évoqué ici peut être positionné à tout endroit dans le fuselage de l'aéronef. Le calculateur peut par exemple être positionné en baie avionique ou à proximité du cockpit de l'aéronef. En particulier, dans le cas de l'architecture selon le quatrième mode de réalisation de l'invention, le calculateur peut parfaitement être un « boîtier pédale » qui reçoit une information de freinage du pilote et la transforme en une consigne de freinage transmise au boîtier de jonction.

## Revendications

1. Architecture de système de freinage pour aéronef, comportant :
- un frein (100 ; 200 ; 300 ; 400) destiné à freiner une roue d'un atterrisseur de l'aéronef, le frein comportant des organes de friction et des actionneurs électromécaniques (103 ; 203 ; 303 ; 403) pour appliquer un effort de freinage sur les organes de friction et exercer ainsi un couple de freinage sur la roue ;
- un calculateur (101 ; 201 ; 301 ; 401) pouvant être situé dans le fuselage de l'aéronef et agencé pour produire des premiers signaux de pilotage ;
- un boîtier de jonction (102 ; 202 ; 302 ; 402) pouvant être situé sur l'atterrisseur, le boîtier de jonction étant connecté au calculateur et aux actionneurs électromécaniques, le boîtier de jonction étant agencé pour recevoir les premiers signaux de pilotage, le boîtier de jonction comprenant des moyens de traitement électriques (105, 205, 305, 405, 605) agencés pour produire, à partir des premiers signaux de pilotage, des deuxièmes signaux de pilotage à destination des actionneurs électromécaniques pour piloter les actionneurs électromécaniques,
les premiers signaux de pilotage et les deuxièmes signaux de pilotage étant des signaux numériques, chaque actionneur électromécanique comportant un corps dans lequel sont intégrés un moteur électrique, un module de puissance (108, 208, 308, 408, 608) pour générer un courant d'alimentation du moteur électrique, et un module de communication numérique (109, 209, 409, 609), les moyens de traitement électriques du boîtier de jonction comportant un commutateur numérique.

2. Architecture selon la revendication 1, dans laquelle les premiers signaux de pilotage et les deuxièmes signaux de pilotage comprennent des signaux numériques de commande des moteurs électriques.

3. Architecture selon la revendication 1, dans laquelle le module de communication numérique (609, 610) est agencé pour réaliser une fonction de contrôle et de commande du moteur électrique de l'actionneur électromécanique, et dans laquelle les premiers signaux de pilotage et les deuxièmes signaux de pilotage comprennent des signaux numériques de commande de freinage.

## Patentansprüche

1. Aufbau eines Bremssystems für ein Luftfahrzeug, umfassend:
- eine Bremse (100; 200; 300; 400), die dazu bestimmt ist, ein Rad eines Fahrwerks des Luftfahrzeugs zu bremsen, wobei die Bremse Reibelemente und elektromechanische Aktoren (103; 203; 303; 403) umfasst, um eine Bremskraft auf die Reibelemente aufzubringen und so ein Bremsmoment auf das Rad auszuüben;
- einen Rechner (101; 201; 301; 401), der sich im Rumpf des Luftfahrzeugs befinden kann und ausgebildet ist, um erste Steuersignale zu erzeugen;
- einen Anschlusskasten (102; 202; 302; 402), der sich an dem Fahrwerk befinden kann, wobei der Anschlusskasten mit dem Rechner und mit den elektromechanischen Aktoren verbunden ist, wobei der Anschlusskasten so ausgebildet ist, dass er die ersten Steuersignale empfängt, wobei der Anschlusskasten elektrische Verarbeitungsmittel (105, 205, 305, 405, 605) umfasst, die ausgebildet sind, um anhand der ersten Steuersignale zweite Steuersignale mit Ziel der elektromechanischen Aktoren zu erzeugen, um die elektromechanischen Aktoren zu steuern,
wobei die ersten Steuersignale und die zweiten Steuersignale digitale Signale sind, wobei jeder elektromechanische Aktor ein Gehäuse umfasst, in dem ein Elektromotor, ein Leistungsmodul (108, 208, 308, 408, 608) zum Erzeugen eines Versorgungsstroms des Elektromotors und ein digitales Kommunikationsmodul (109, 209, 409, 609) integriert sind, wobei die elektrischen Verarbeitungsmittel des Anschlusskastens einen digitalen Schalter umfassen.

2. Aufbau nach Anspruch 1, bei dem die ersten Steuersignale und die zweiten Steuersignale digitale Befehlssignale der Elektromotoren umfassen.

3. Aufbau nach Anspruch 1, bei dem das digitale Kommunikationsmodul (609, 610) so ausgebildet ist, dass es eine Kontroll- und Befehlsfunktion des Elektromotors des elektromechanischen Aktors durchführt, und bei dem die ersten Steuersignale und die zweiten Steuersignale digitale Bremsbefehlssignale umfassen.

## Claims

1. A braking system architecture for aircraft, the architecture comprising:
• a brake (100; 200; 300; 400) for braking a wheel of an undercarriage of the aircraft, the brake including friction members and electromechanical actuators (103; 203; 303; 403) for applying a braking force against the friction members and thereby exerting a braking torque on the wheel;
• a computer (101; 201; 301; 401) that can be situated in the fuselage of the aircraft and arranged to produce first control signals; and
• a junction box (102; 202; 302; 402) that can situated on the undercarriage, the junction box being connected to the computer and to the electromechanical actuators, the junction box being arranged to receive the first control signals, the junction box comprising electrical processor means (105, 205, 305, 405, 605) arranged to use the first control signals to produce second control signals for application to the electromechanical actuators in order to control the electromechanical actuators,
the first control signals and the second control signals being digital signal,
each electromechanical actuator including a body having integrated therein an electric motor, a power module (108, 208, 308, 408, 608) for generating a power supply current for the electric motor, and a digital communication module (109, 209, 409, 609),
the electrical processor means of the junction box including a digital switch.

2. An architecture according to claim 1, wherein the first control signals and the second control signals comprise digital signals for controlling the electric motors.

3. An architecture according to claim 1, wherein the digital communication module (609, 610) is arranged to perform a function of monitoring and controlling the electric motor of the electromechanical actuator, and wherein the first control signals and the second control signal comprise digital braking control signals.
